**Europäisches Patentamt**

**European Patent Office**

**Office européen des brevets**

(19)

(11) Veröffentlichungsnummer: **0 290 600 B1**

(12) # EUROPÄISCHE PATENTSCHRIFT

(45) Veröffentlichungstag der Patentschrift:
08.01.92 Patentblatt 92/02

(51) Int. Cl.⁵: **G11B 17/22, G11B 17/30**

(21) Anmeldenummer: **88900875.1**

(22) Anmeldetag: **06.11.87**

(86) Internationale Anmeldenummer:
**PCT/EP87/00684**

(87) Internationale Veröffentlichungsnummer:
**WO 88/03694 19.05.88 Gazette 88/11**

(54) **PLATTENSPIELER MIT MAGAZIN.**

(30) Priorität: **14.11.86 DE 3638913**

(43) Veröffentlichungstag der Anmeldung:
**17.11.88 Patentblatt 88/46**

(45) Bekanntmachung des Hinweises auf die
Patenterteilung:
**08.01.92 Patentblatt 92/02**

(84) Benannte Vertragsstaaten:
**AT BE CH DE FR GB IT LI LU NL SE**

(56) Entgegenhaltungen:
**EP-A- 0 063 894**
**EP-A- 0 173 136**
**EP-A- 0 267 547**

(56) Entgegenhaltungen:
**GB-A- 2 160 349**
**IBM Technical Disclosure Bulletin, vol. 20, no.
12, May 1978, (New York, US) C.A. Larson et
al.: "Orient and interlock sensor arrangement
for diskette picker mechanism", pages
5281-5286**

(73) Patentinhaber: **Deutsche Thomson-Brandt
GmbH
Hermann-Schwer-Strasse 3 Postfach 1307
W-7730 Villingen-Schwenningen (DE)**

(72) Erfinder: **CASPERS, Johannes
An der Kapelle 1
W-7730 Villingen-Schwenningen (DE)**
Erfinder: **LAUFER, Helmut
Eichendorffweg 12
W-7742 St. Georgen (DE)**

**Beschreibung**

Aus der EP-A 0 063 894 ist ein Aufzeichnungs- und Wiedergabegerät für biegsame plattenförmige Aufzeichnungsträger, die sogenannte Floppy Disc, bekannt, das mit einem Magazin ausgestattet ist, in dessen Fächern die biegsamen Aufzeichnungsträger gelagert sind. Das mittlere Fach des Magazins ist eben, dagegen haben die restlichen Fächer einen Knick. Alle Aufzeichnungsträger mit Ausnahme des mittleren sind daher im Magazin geknickt.

Zur Aufzeichnung oder zur Wiedergabe von Daten wird ein Aufzeichnungsträger nicht vollständig, sondern nur so weit aus dem Magazin von einer Entnahmevorrichtung genommen, daß der Plattenantrieb in die Bohrung in der Mitte des plattenförmigen Aufzeichnungsträgers eingreifen kann und daß der Aufzeichnungsträger nicht mehr im Knickpunkt des Magazin liegt. Im Aufnahme- und im Wiedergabebetrieb liegt der Aufzeichnungsträger daher eben, während er im Magazin geknickt liegt.

Ein Nachteil des Magazins für dieses Aufzeichnungs- und Wiedergabegerät besteht nun darin, daß es infolge des Knicks nur für biegsame Aufzeichnungsträger geeignet ist. Ein starrer Aufzeichnungsträger wie z.B. eine Compact-Disc würde beim Einschieben in das Magazin zerbrechen.

Es ist deshalb Aufgabe der Erfindung, einen Plattenspieler mit Magazin, der auch für starre Platten geeignet ist, so zu gestalten, daß er nur wenig Platz in Anspruch nimmt.

Die Erfindung löst diese Aufgabe dadurch, daß im Boden eines jeden Fachs des Magazins eine halbkreisförmige Aussparung, deren Durchmesser größer als der Durchmesser eines plattenförmigen Aufzeichnungsträgers gewählt ist, derart auf der Entnahmeseite des Magazins vorgesehen ist, daß ein zum Abspielen entnommener plattenförmiger Aufzeichnungsträger frei in der Aussparung drehbar ist.

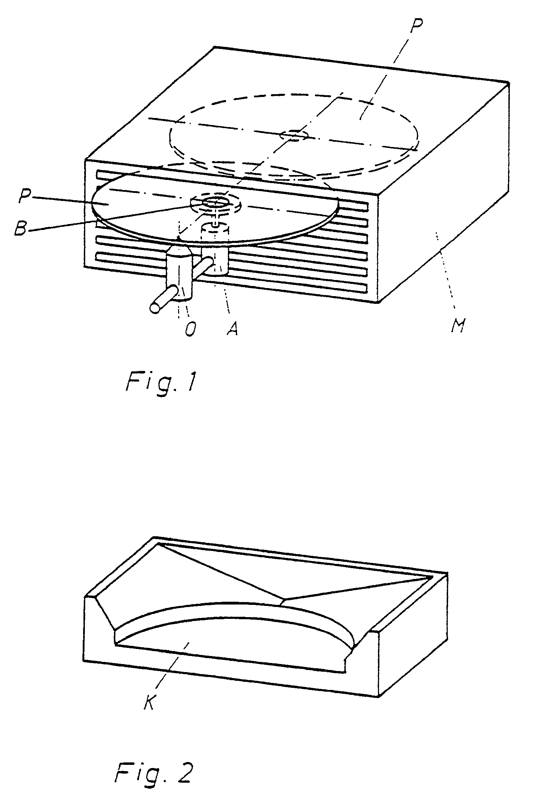

In der Europäischen Patentanmeldung EP-A 0 267 547, die dasselbe Anmeldedatum wie die vorliegende Anmeldung trägt, ist ein Magazin mit mehreren Fächern zur Aufnahme von plattenförmigen Aufzeichnungsträgern beschrieben. Aus den Figuren 2 und 3 dieser Europäischen Offenlegungsschrift ist ersichtlich, daß auf der Seite, wo die plattenförmigen Aufzeichnungsträger aus dem Magazin zum Abspielen entnommen werden, eine kreisförmige Aussparung vorgesehen ist. Über deren Gestaltung besonders im Verhältnis zum Aufzeichnungsträger und deren Zweck werden jedoch keinerlei Angaben gemacht.

Aus der EP-A 0 267 538, die dasselbe Prioritätsdatum wie die vorliegenden Anmeldung hat, ist ein Plattenspieler mit Magazin bekannt. In den Figuren 2 und 4 dieser Europäischen Offenlegungsschrift ist erkennbar, daß die Platte in der Abspielposition nicht vollständig aus dem Magazin entnommen ist, sondern teilweise noch in das Magazin hinein ragt.

Es zeigen

Figur 1 den optischen Abtaster, den Plattenantrieb und das Magazin eines erfindungsgemäßen CD-Spielers;

Figur 2 ein Fach des Magazins.

In Figur 1 ist gezeigt, wie eine CD-Platte P abgespielt wird. Sie ist nur so weit aus dem Magazin M entnommen, daß der Plattenantrieb A in die Bohrung B der CD-Platte P eingreifen kann. Mittels des optischen Abtastsystems O werden die auf den spiralförmigen Datenspuren der CD-Platte gespeicherten Daten gelesen. Dadurch, daß die CD-Platte P nicht vollständig, sondern nur teilweise aus dem Magazin M heraus gezogen wird, ergibt sich eine große Platzersparnis. Außerdem verringert sich die Zeit beträchtlich, die benötigt wird, um eine CD-Platte P aus dem Magazin M herauszuziehen und wieder in das Magazin hineinzuschieben.

In der Figur 2 ist die Form eines Fachs des Magazins M dargestellt.

Im Boden eines jeden Fachs des Magazins M ist eine halbkreisförmige Aussparung K vorgesehen, deren Durchmesser etwas größer gewählt ist als der Durchmesser einer CD-Platte P. Während des Abspielens befindet sich die CD-Platte P genau in dieser Aussparung K, in der sich die Platte frei drehen kann.

Die Erfindung ist keineswegs auf CD-Spieler beschränkt. Sie ist für alle Geräte geeignet, die Informationen aus einem plattenförmigen Aufzeichnungträger, sei es nun durch Berührung oder berührungslos lesen.

**Patentansprüche**

1. Plattenspieler mit einem Magazin (M), in dessen Fächern mehrere plattenförmige Aufzeichnungsträger (P) ablegbar sind, und mit einem Mechanismus, der einen abzuspielenden plattenförmigen Aufzeichnungsträger (P) nur so weit aus dem Magazin (M) entnimmt, daß der Plattenantrieb (A) in die Bohrung (B) des plattenförmigen Aufzeichnungsträgers eingreifen kann, **dadurch gekennzeichnet,** daß im Boden eines jeden Fachs des Magazins (M) eine halbkreisförmige Aussparung (K), deren Durchmesser größer als der Durchmesser eines plattenförmigen Aufzeichnungsträgers gewählt ist, derart auf der Entnahmeseite des Magazins (M) vorgesehen ist, daß ein zum Abspielen entnommener plattenförmiger Aufzeichnungsträger (P) frei in der Aussparung (K) drehbar ist.

**Revendications**

1. Lecteur de disques avec un magasin (M) dans les casiers duquel plusieurs supports d'enregistrement en forme de disque (P) peuvent être déposés et avec un mécanisme quine retire un support d'enregistrement en forme de disque (P) devant être lu que jusqu'à ce que la commande du disque (A) s'engrène dans la forure (B) du support d'enregistrement. **caractérisé en ce** qu'un évidement semi-circulaire (K), dont le diamètre est sélectionné supérieur au diamètre d'un support d'enregistrement en forme de disque, est prévu au fond de chacun des casiers du magasin (M) sur le côté prélèvement du magasin (M) de telle manière qu'un support d'enregistrement en forme de disque (P) prélevé pour être lu puisse tourner librement dans l'évidement (K).

**Claims**

1. A disc player with a magazine (M), in the compartments of which a plurality of disc-shaped recording carriers (P) can be stored and having a mechanism which removes a disc-shaped recording carrier (P) which is to be played only so far out of the magazine (M) that the disc drive (A) can engage the hole (B) of the disc-shaped recording carrier, **characterised in that** in the base of each compartment of the magazine (M) there is provided in such a way at the removal side of the magazine (M) a semicircular recess (K), the diameter of which is selected to be greater than the diameter of a disc-shaped recording carrier, that a disc-shaped recording carrier (P) removed for playing is freely rotatable in the recess (K).

Fig. 1

Fig. 2